# EUROPEAN PATENT SPECIFICATION

(11) **EP 2 771 393 B1**
(45) Date of publication and mention of the grant of the patent: **06.09.2017**
(21) Application number: 12769549.2
(22) Date of filing: 14.09.2012
(51) Int. Cl.: C08J 9/32, C08L 23/10, C08L 23/12, C08L 23/16, C08L 51/06, B32B 5/18, B32B 27/06

(54) **COMPOSITION, FOAM, AND ARTICLE MADE THEREFROM**
ZUSAMMENSETZUNG, SCHAUMSTOFF UND DARAUS HERGESTELLTER GEGENSTAND
COMPOSITION, MOUSSE ET ARTICLE FABRIQUÉ AVEC LADITE COMPOSITION

(30) Priority: 25.10.2011 US 201113281076
(43) Date of publication of application: 03.09.2014
(73) Proprietor: ExxonMobil Chemical Patents Inc., Baytown, TX 77520 (US)
(72) Inventor: HAUG, Matthias, M., 59348 Luedinghausen (DE); KENENS, Leander, B-3010 Kessel-Lo (BE)
(74) Representative: ExxonMobil Chemical Europe Inc.
(86) International application number: PCT/US2012/055556
(87) International publication number: WO 2013/062685

(56) References cited:
- DE-A1- 19 531 631
- DATABASE WPI Week 201032 Thomson Scientific, London, GB; AN 2010-E91948 XP002711388, -& WO 2010/050628 A2 (UBE IND LTD) 6 May 2010 (2010-05-06)

## Description

### FIELD OF THE INVENTION

The present invention relates to a composition, preferably a composition for making a foam, and in particular, a composition for making a foam having homogeneous closed cell structure, and foams and articles made therefrom.

### BACKGROUND OF THE INVENTION

Thermoplastic elastomers (TPE) are both elastomeric and thermoplastic. They are distinguished from thermoset rubbers which are elastomeric but not thermoplastic due to the cross-linking or vulcanization of the rubber, and are distinguished from general thermoplastics which are generally stiff and hard, but not elastomeric.

Thermoplastic vulcanizate is a class of TPE where cross-linked rubber forms a dispersed, particulate, elastomeric phase within a thermoplastic phase of a stiff thermoplastic such that TPE properties are achieved. Thermoplastic vulcanizates, TPVs or TPV compositions, are conventionally produced by dynamic vulcanization. Dynamic vulcanization is a process whereby a rubber component is crosslinked, or vulcanized, under intensive shear and mixing conditions within a blend of at least one non-vulcanizing thermoplastic polymer component at or above the melting point of that thermoplastic. Typically, the rubber component forms cross-linked, elastomeric particles dispersed uniformly in the thermoplastic. See, for example, U.S. Patent Nos. 4,130,535; 4,311,268; 4,594,390; and 6,147,160. Dynamically vulcanized thermoplastic elastomers consequently have a combination of both thermoplastic and elastic properties. Conventional plastic processing equipment can extrude, inject, or otherwise mold, and thus press and shape TPV compositions into useful products alone or in composite structures with other materials.

TPEs and TPVs can be used as a foaming material by incorporating a modifier or filler or other components. Endothermic and exothermic chemical or physical foaming agents are blended to the thermoplastic base material. For example, WO 2004/016679 A2 describes soft thermoplastic vulcanizate foams comprising a polyolefin thermoplastic resin, at least partially crosslinked olefinic elastomer, hydrogenated styrenic block copolymer, and optional additives. The soft foams are said to have smooth surfaces, low water absorption, improved compression set and compression load deflection. WO 2007/0044123 A1 describes TPVs which can be foamed by employing supercritical foaming methods, including at least one cured rubber component, at least one conventional thermoplastic resin component, at least one random polypropylene copolymer, and at least one thermoplastic elastomer styrenic block copolymer.

Though the above mentioned methods can provide a foamed or expanded material, these methods often result in a structure that is not homogeneous and lacks functional foam properties such as soft touch, reduced deflection, improved relaxation performance, and low water absorption, which are often required in soft touch applications. Combination of chemical foaming agent and mechanical intervention in the molding process (such as cores, invert gas counter pressure and fast release) may provide some improvement, but it still does not provide the desired high level requirements in automotive, industrial or consumer markets.

### SUMMARY OF THE INVENTION

The present invention aims to provide a new composition, preferably for making a foam having a homogeneous closed cell structure, a balanced load deflection and elasticity, including soft touch, desirable reduced deflection, improved relaxation performance, and low water absorption.

In one aspect, the present invention provides a composition, preferably for making a closed cell foam, comprising:
a) a thermoplastic vulcanizate, preferably in an amount of at least about 80 wt.% based on the total weight of the composition, and
b) a thermo-expandable microsphere comprising a polymer shell and a propellant encapsulated in said polymer shell, where the thermo-expandable microsphere is in an amount of from 0.1 wt.% to 10 wt.% based on the total weight of the
   composition.

In another aspect, the composition according to the present invention further comprises:
c) a polyolefin-based graft copolymer, preferably in an amount of from 0.1 wt.% to 10 wt.% based on the total weight of the composition.

In another aspect, the present invention provides a method for preparing a composition comprising a step of combining a) a thermoplastic vulcanizate, b) a thermo-expandable microsphere comprising a polymer shell and a propellant encapsulated in said polymer shell, and optionally c) a polyolefin-based graft copolymer.

In further aspect, the present invention provides a foam made from the composition according to the present invention.

In further another aspect, the present invention provides a method for preparing a foam comprising steps of: (i) combining a thermoplastic vulcanizate, a thermo-expandable microsphere comprising a polymer shell and a propellant encapsulated in said polymer shell, and optionally a polyolefin-based graft copolymer, to form a composition; and (ii) foaming the composition to form the foam.

In further another aspect, the present invention provides an article comprising the foam or the composition according to the present invention.

### BRIEF DESCRIPTION OF DRAWINGS

Figure 1 (a) to (c) illustrate a cross section of a foam according to preferred embodiment at a position close to the gate of the injection mold (a), at an intermediate position to the gate of the injection mold (b), and at an opposite position to the gate of the injection mold (c). Figure 1 (d) illustrates a foam having a structure that is not homogeneous.
Figure 2 illustrates hardness and compression performance of an article comprising a foam according to preferred embodiments in comparison with an article comprising only skin layer made from the thermoplastic vulcanizate.

### DETAILED DESCRIPTION OF THE INVENTION

Each of the inventions will now be described in greater detail below, including specific embodiments, versions and examples, but the inventions are not limited to these embodiments, versions or examples, which are included to enable a person having ordinary skill in the art to make and use the inventions, when the information in this patent is combined with available information and technology.

Various terms as used herein are defined below. To the extent a term used in a claim is not defined below, it should be given the broadest definition persons in the pertinent art have given that term as reflected in one or more printed publications or issued patents.

The present invention aims to provide a new composition, preferably for making a foam having a homogeneous closed cell structure, a balanced load deflection and elasticity, and low water absorption. In one embodiment, the invention provides a composition, preferably a composition for making foam, which composition comprises a thermoplastic vulcanizate and a thermo-expandable microsphere comprising a polymer shell and a propellant encapsulated in said polymer shell.

The term "thermoplastic vulcanizate" (also referred to as thermoplastic vulcanizate composition or TPV) is broadly defined as any material that includes a dispersed, at least partially vulcanized, rubber component within a thermoplastic resin component. A TPV material can further include additive oil, other ingredients, other additives, or combinations thereof.

The term "vulcanizate" means a composition that includes some component (e.g., rubber) that has been vulcanized. The term "vulcanized" is defined herein in its broadest sense, as reflected in any issued patent, printed publication, or dictionary, and refers in general to the state of a composition after all or a portion of the composition (e.g., crosslinkable rubber) has been subjected to some degree or amount of vulcanization. Accordingly, the term encompasses both partial and total vulcanization. A preferred type of vulcanization is "dynamic vulcanization," discussed below, which also produces a "vulcanizate." Also, in at least one specific embodiment, the term vulcanized refers to more than insubstantial vulcanization, e.g., curing (crosslinking) that results in a measurable change in pertinent properties, e.g., a change in the melt flow index (MFI) of the composition by 10% or more (according to any ASTM-1238 procedure). In at least that context, the term vulcanization encompasses any form of curing (crosslinking), both thermal and chemical, that can be utilized in dynamic vulcanization.

The term "dynamic vulcanization" means vulcanization or curing of a curable rubber component blended with a thermoplastic resin component under conditions of shear at temperatures sufficient to plasticize the mixture. In at least one embodiment, the rubber component is simultaneously crosslinked and dispersed as micro-sized particles within the thermoplastic resin component. Depending on the degree of cure, the rubber component to thermoplastic resin component ratio, compatibility of the rubber component and thermoplastic resin component, the kneader type and the intensity of mixing (shear rate), other morphologies, such as co-continuous rubber phases in the plastic matrix, are possible.

As the term is used herein, a "partially vulcanized" rubber component is one wherein more than 5 weight percent (wt.%) of the crosslinkable rubber component is extractable in boiling xylene, subsequent to vulcanization (preferably dynamic vulcanization), e.g., crosslinking of the rubber phase of the thermoplastic vulcanizate. For example, at least 5 wt.% and less than 20 wt.%, or 30 wt.%, or 50 wt.%, of the crosslinkable rubber component can be extractable from the specimen of the thermoplastic vulcanizate in boiling xylene. The percentage of extractable rubber component can be determined by the technique set forth in U.S. Patent No. 4,311,628.

The rubber component of the thermoplastic vulcanizates can be any material that is considered by persons skilled in the art to be a "rubber," preferably a crosslinkable rubber component (e.g., prior to vulcanization) or crosslinked rubber component (e.g., after vulcanization). For example, the rubber component can be any olefin-containing rubber such as ethylene-propylene copolymers (EPM), including particularly saturated compounds that can be vulcanized using free radical generators such as organic peroxides, as noted in U.S. Patent No. 5,177,147. Other rubber components can include ethylene-propylene-diene (EPDM) rubber, or EPDM-type rubber, for example, an EPDM-type rubber can be a terpolymer derived from the polymerization of at least two different monoolefin monomers having from 2 to 10 carbon atoms, preferably 2 to 4 carbon atoms, and at least one poly-unsaturated olefin having from 5 to 20 carbon atoms.

The rubber component can also be a butyl rubber. The term "butyl rubber" includes a polymer that predominantly includes repeat units from isobutylene but also includes a few repeat units of a monomer that provides a site for crosslinking. Monomers providing sites for crosslinking include a polyunsaturated monomer such as a conjugated diene or divinyl benzene. In one or more embodiments of the invention, the butyl rubber polymer can be halogenated to further enhance reactivity in crosslinking. Those polymers are referred to as "halobutyl rubbers."

Further, the rubber component can be homopolymers of conjugated dienes having from 4 to 8 carbon atoms and rubber copolymers having at least 50 wt.% repeat units from at least one conjugated diene having from 4 to 8 carbon atoms. The rubber component can also be synthetic rubber, which can be nonpolar or polar depending on the comonomers. Examples of synthetic rubbers include synthetic polyisoprene, polybutadiene rubber, styrene-butadiene rubber, butadiene-acrylonitrile rubber, etc. Amine-functionalized, carboxy-functionalized or epoxy-functionalized synthetic rubbers can also be used. Examples of those include maleated EPDM, and epoxy-functionalized natural rubbers.

A list of preferred rubber component include, but are not limited to, ethylene-propylene rubber, ethylene-propylene-diene rubber, natural rubber, butyl rubber, halobutyl rubber, halogenated rubber copolymer of p-alkystyrene and at least one isomonoolefin having 4 to 7 carbon atoms, a copolymer of isobutylene and divinyl-benzene, a rubber homopolymer of a conjugated diene having from 4 to 8 carbon atoms, a rubber copolymer having at least 50 wt.% repeat units from at least one conjugated diene having from 4 to 8 carbon atoms and a vinyl aromatic monomer having from 8 to 12 carbon atoms, or acrylonitrile monomer, or an alkyl substituted acrylonitrile monomer having from 3 to 8 carbon atoms, or an unsaturated carboxylic acid monomer, or an unsaturated anhydride of a dicarboxylic acid, or combinations thereon.

In one or more embodiments of the invention, the rubber component is present in the amount of from 15 wt.% to 95 wt.%, based upon the total weight of rubber component and thermoplastic resin component. In one or more preferred embodiments, the rubber component is present in the amount of from 45 wt.% to 90 wt.% based upon the total weight of rubber component and thermoplastic resin component. In one or more even preferred embodiments, the rubber component is present in the amount of from 60 wt.% to 88 wt.% based upon the total weight of rubber component and thermoplastic resin component.

The thermoplastic resin component of the thermoplastic vulcanizates can be any material that is not a "rubber" and that is a polymer or polymer blend considered by persons skilled in the art as being thermoplastic in nature, e.g., a polymer that softens when exposed to heat and returns to its original condition when cooled to room temperature. The thermoplastic resin component can contain one or more polyolefins, including polyolefin homopolymers and polyolefin copolymers. Except as stated otherwise, the term "copolymer" means a polymer derived from two or more monomers (including terpolymers, tetrapolymers, etc.). In one or more embodiments of the invention, the thermoplastic resin component comprises at least one of i) a polymer prepared from olefin monomers having 2 to 7 carbon atoms, and ii) a copolymer prepared from olefin monomers having 2 to 7 carbon atoms with a (meth)acrylate or a vinyl acetate. Illustrative polyolefins can be prepared from mono-olefin monomers including, but are not limited to, ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. In one or more preferred embodiments, the thermoplastic resin component comprises polyethylene, polypropylene, ethylene-propylene copolymer or combinations thereof. Preferably, the thermoplastic resin component is unvulcanized or non-crosslinked.

In one or more embodiments of the invention, the thermoplastic resin component contains polypropylene. The term "polypropylene" as used herein broadly means any polymer that is considered a "polypropylene" by persons skilled in the art (as reflected in at least one patent or publication), and includes homo, impact, and random polymers or copolymer of propylene. In one or more embodiments, the thermoplastic resin component is or includes isotactic polypropylene. In one or more embodiments of the invention, the thermoplastic resin component is or includes a polypropylene, which can be derived only from propylene monomers (i.e., having only propylene units) or be derived from mainly propylene (more than 75% propylene) and other comonomers. As noted herein, certain polypropylenes having a high MFR (e.g., from a low of 10, or 15, or 20 dg/min to a high of 25 or 30 dg/min) may be used. Preferably, the thermoplastic resin component contains one or more crystalline propylene homopolymers or copolymers of propylene having a melting temperature at least 105°C as measured by DSC. Preferred copolymers of polypropylene include, but are not limited to, terpolymers of propylene, impact copolymers of propylene, random polypropylene, random copolymer of propylene, and mixtures thereof. Preferred comonomers have 2 carbon atoms, or from 4 to 12 carbon atoms. Preferably, the comonomer is ethylene. Such thermoplastic resin components and methods for making the same are described in U.S. Patent No. 6,342,565.

In one or more embodiments of the invention, the amount of the thermoplastic vulcanizate in the composition according to the present invention is at least 80 wt.%, or at least 85 wt.%, or at least 90 wt.%, or at least 95 wt.%, based on the total weight of the composition.

In one or more embodiments of the invention, the thermoplastic vulcanizate contains less than 50 wt.%, or less than 30 wt.%, or less than 10 wt.%, or less than 1 wt.% of a styrenic block copolymer having a hydrogenated midblock of styrene-ethylene/butylene-styrene (SEBS) or styrene-ethylene/propylene-styrene (SEPS). In one embodiment, the thermoplastic vulcanizate of the invention does not contain any SEBS, or does not contain any SEPS.

In one or more embodiments of the invention, additive oils may be added into the thermoplastic vulcanizates. The term "additive oil" includes both "process oils" and "extender oils." For example, "additive oil" can include hydrocarbon oils and plasticizers, such as organic esters and synthetic plasticizers. The ordinarily skilled chemist will recognize which type of oil should be used with a particular rubber, and also be able to determine the suitable amount of oil, but an addition of additive oils shall not influence the foam ability of composition.

Any curative that is capable of curing or crosslinking the rubber component can be used. Illustrative curatives include, but are not limited to, phenolic resins, peroxides, maleimides, and silicon-containing curatives. Depending on the rubber component employed, certain curatives can be preferred. For example, where elastomeric copolymers containing units deriving from vinyl norbornene are employed, a peroxide curative can be preferred because the required quantity of peroxide will not have a deleterious impact on the engineering properties of the thermoplastic phase of the thermoplastic vulcanizate. In other situations, however, it can be preferred not to employ peroxide curatives because they can, at certain levels, degrade the thermoplastic resin components of the thermoplastic vulcanizate.

In one or more embodiments of the invention, other additives may be added into the thermoplastic vulcanizates. The term "other additives" can include, but is not limited to, thermoplastic modifiers, lubricants, antioxidants, antiblocking agents, stabilizers, anti-degradants, anti-static agents, waxes, foaming agents, pigments, processing aids, adhesives, tackifiers, plasticizers, wax, and discontinuous fibers (such as world cellulose fibers). Illustrative particulate fillers include, but are not limited to, carbon black, silica, titanium dioxide, calcium carbonate, colored pigments, clay, and combinations thereof. When non-black fillers are used, it can be desirable to include a coupling agent to compatibilize the interface between the non-black fillers and polymers. The ordinarily skilled chemist will recognize which type of additives can be used based upon the property requirements, and also be able to determine the amount of additives, but an addition of additive oils shall not influence the foam ability of composition.

The thermoplastic vulcanizate suitable to the composition according to the present invention can have various melt flow rates (MFR, determined by, for example, ASTM D-1238 Condition L). In some embodiments, the TPV has a high MFR, whereas in some other embodiments, the TPV may have a low MFR. Obviously, to a person skilled in the art, high MFR will be preferred in the composition according to the present invention in order for a good foam ability.

In one or more embodiments of the invention, the thermoplastic resin component is present in the amount of from 5 wt.% to 85 wt.% based upon the total weight of rubber component and thermoplastic resin component. In one or more preferred embodiments, the thermoplastic resin component is present in the amount of from 10 wt.% to 55 wt.% based upon the total weight of rubber component and thermoplastic resin component. In one or more even preferred embodiments, the thermoplastic resin component is present in the amount of from 12 wt.% to 40 wt.% based upon the total weight of rubber component and thermoplastic resin component.

Any known process for making TPVs can be employed. For example, the individual materials and components, such as the one or more rubbers, thermoplastic resin components, thermoplastic modifiers, curing agents, additive oils, and other additives, can be mixed at a temperature above the melting temperature of the thermoplastic resin components to form a melt. Illustrative mixing equipment include: extruders with kneaders or mixing elements with one or more mixing tips or flights, extruders with one or more screws, and extruders of co or counter rotating type. Suitable mixing equipment also include Brabender (Registered Trademark mixers), Banbury (Registered Trademark mixers), Buss mixers and kneaders, and Farrell Continuous mixers, for example. One or more of those mixing equipment, including extruders, can be used in series. Some additional details for making a TPV are given in U.S. Patent No. 4,594,390.

A thermo-expandable microsphere in the composition according to the present invention may serve as a foaming agent. A thermo-expandable microsphere is broadly defined as a microsphere comprising a thermoplastic polymer shell and a propellant encapsulated therein. Examples are known in the art and described in, for example, U.S. Patent Nos. 6,582,633 and 3,615,972, WO 99/46320 and WO 99/43758. Examples of such thermo-expandable microsphere include, for example, EXPANCEL™ products commercially available from Akzo Nobel N.V.

A polymer shell is any shell-like structure made from a polymer. It can be hollow, filled, or partially filled such as with a propellant. The polymer shell can generally be made of a homo- or co-polymer of ethylenically unsaturated monomers comprising nitrile-containing monomer, and the propellant can be any liquid having a boiling temperature not higher than the softening temperature of the thermoplastic polymer shell. Expansion of the thermoplastic microspheres is typically physical by nature. It is believed that as the propellant is heated up, the propellant expands, increases the intrinsic pressure, at the same time the shell softens, thus causes the microspheres' expansion, normally from 2 to 8 times their diameter, or 30 to 80 times volume, and the thickness of polymer shell may decrease to 0.1µm or even thinner. Factors that may affect the expandability of the microspheres include volatility of the encapsulated propellant, gas permeability, and viscoelasticity of the polymer shell.

Various monomers are suitable for preparation of the polymer shell and may comprise acrylonitrile, methacrylonitrile, α-haloacrylonitrile, α-ethoxyacrylonitrile, fumarc nitrile, acrylic esters or any combinations thereof. In one preferable embodiment, the monomer is made from polyacrylonitrile. The polymer shell may have a softening temperature, i.e., the glass transition temperature (Tg) ranging from 80°C to 200°C.

The liquids suitable for preparation of the propellant of the thermo-expandable microsphere usually have a boiling point lower than the softening temperature of the polymer shell at atmosphere pressure. Suitable liquids include, but not limited to, isobutane, 2,4-dimethylbutane, 2-methylpentane, 3-methylpentane, n-hexane, cyclohexane, heptane, isooctane, or any combinations thereof.

When a thermo-expandable microsphere is heated up, it starts to expand at a certain temperature. The temperature at which the expansion starts is called Tₛₜₐₜ, while the temperature at which the maximum expansion is reached is called Tₘₐₓ. The Tₛₜₐᵣₜ and Tₘₐₓ can be measured by thermo mechanical analysis (TMA) of thermo expansion property. The thermo-expandable microsphere suitable to the composition of the present invention may have a Tₛₜₐᵣₜ of at least 100°C, preferably at least 110°C, or at least 120°C, or at least 130°C, or at least 140°C, and preferably a Tₘₐₓ of less than 300°C, more preferably less than 260°C, or less than 240°C, or less than 220°C, or less than 210°C.

Thermo-expandable microspheres suitable to the composition of the present invention before expansion may have various average particle sizes. In some embodiments, the average particle size may range from 1 µm to 500 µm, preferably from 2 µm to 300 µm, more preferably from 4 µm to abot 100 µm, and most preferably from 5 µm to 50 µm. The average particle size of the expandable microsphere, after expansion, is preferably not less than 50 µm, preferably no less than 80 µm, more preferably no less than 100 µm, and most preferably not less than 120 µm.

The production of thermo-expandable microsphere can be any methods comprising a step of polymerizing the monomers in an aqueous suspension in the presence of a propellant, and are known as described in the earlier publication, for example, U.S. Patent No. 3,615,972, WO 99/46320, and WO 99/43758.

The amount of the thermo-expandable microsphere in the composition according to the present invention can range from 0.1 wt.% to about 10 wt.% by the total weight of the composition. Typically, if the amount of the thermo-expandable microsphere is less than 0.1 wt.%, the foaming effect and foam properties, may be negatively impacted. On the other hand, typically if the amount of the thermo-expandable microsphere is greater than 10 wt.%, the mechanical properties of the foam may be compromised. In some embodiments of the invention, the thermo-expandable microsphere contained in the composition is preferably present in amount of at least 0.2 wt.%, 0.3 wt.%, 0.5 wt.% , 1 wt.%, or 1.5 wt.%, and is preferably less than 8 wt.%, 6 wt.%, 5 wt.%, 3 wt.%, or 1.5 wt.% by the total weight of the composition.

The physical expansion of a thermo-expandable microsphere typically results in a foam having a close and homogenous cell structure, which provides low water absorption of the foamed composition according to the present invention. Other advantages due to the use of thermo-expandable microsphere will become obvious to one skilled in the art according to the concept of the present invention.

In some embodiments of the invention, the composition according to the present invention further comprises a polyolefin-based graft copolymer, which can provide improved compatibility, dispersion and stable bonding between the thermo-expandable microsphere and the thermoplastic vulcanizates, and accordingly can minimize the loss of properties, especially tear resistance and physical properties of the molded foam.

Polyolefin-based graft copolymers are known to the person skilled in the art and are useful as compatibilizers for polymer blend composition containing polyolefins. Illustrative polyolefins can be prepared from mono-olefin monomers including, but are not limited to, monomers having 2 to 7 carbon atoms, such as ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. Preferably, the polyolefin are prepared from ethylene, propylene, or ethylene-propylene copolymers.

The grafting monomer can be any ethylenically unsaturated carboxylic acids or carboxylic acids derivatives, such as acid anhydride, ester, salt, amide or imide. Illustrative examples of such grafting monomers include acrylic acid, methacrylic acid, maleic acid, fumaric acid, itaconic acid, citraconic acid, mesaconic acid, maleic anhydride, 4-methyl cyclohex-4-ene-1,2-dicarboxylic acid anhydride,bicyclo(2.2.2)oct-5-ene-2,3-dicarboxylic acid anhydride, 1,2,3,4,5,8,9,10-octahydronaphthalene-2,3-dicarboxylic acid anhydride, 2-oxa-1,3-diketospiro(4.4)non-7-ene, bicyclo(2.2.1)hept-5-ene-2,3-dicarboxylic acid anhydride, maleopimaric acid, tetrahydrophtalic anhydride, norborn-5-ene-2,3-dicarboxylic acid anhydride, nadic anhydride, methyl nadic anhydride, himic anhydride, methyl himic anhydride, and x-methylbicyclo(2.2.1)hept-5-ene-2,3-dicarboxylic acid anhydride (XMNA).

Maleic anhydride is a preferred grafting monomer. As used herein, the term "grafting" denotes covalent bonding of the grafting monomer to a polyolefin chain. In a preferred polyolefin-maleic anhydride graft copolymer in the composition according to the present invention, the grafted maleic anhydride concentration is generally in the range of from a low value of 0.1 wt.%, 0.2 wt.%, 0.3 wt.%, 0.4 wt.%, 0.5 wt.%, 0.8 wt.%, or 1 wt.% to a high value of 5 wt.%, 4 wt.%, 3 wt.%, 2 wt.%, 1.5 wt.%, 1.2 wt.%, or 1 wt.%.

The polyolefin-based graft copolymer can be prepared by any methods known in the art, for example, in a fluidized bed reactor or melt grafting, as desired. Preferably, it can be conventionally prepared by melt blending the ungrafted polyolefinic composition, in the substantial absence of a solvent, with a free radical generating catalyst, such as a peroxide catalyst, in the presence of the grafting monomer in a shear-imparting reactor, such as an extruder reactor. Single screw but preferably twin screw extruder reactors such as co-rotating intermeshing extruder or counter-rotating non-intermeshing extruders but also co-kneaders such as those sold by Buss, are especially preferred.

The preferred sequence of events used for the grafting reaction consists of melting the polyolefin composition, adding and dispersing the grafting monomer, introducing the peroxide and venting the unreacted monomer and by-products resulting from the peroxide decomposition. Other sequences may include, feeding the monomers and the peroxide pre-dissolved in a solvent.

The grafting reaction can be carried at a temperature selected to minimize or avoid rapid vaporization and consequent losses of the catalyst and monomer and to have residence times 6 to 7 times the half life time of the peroxide. A temperature profile where the temperature of the polyolefin melts increases gradually through the length of the reactor up to a maximum in the grafting reaction zone of the reactor, and then decreases toward the reactor output is preferred. Temperature attenuation in the last sections of the extruder is desirable for product pelletizing purposes.

Illustrative examples of peroxide used in grafting reaction diacyl peroxides such as benzoyl peroxide; peroxyesters such as tert-butyl peroxy benzoate, tert-butylperoxy acetate, OO-tert-butyl-O-(2-ethylhexyl)monoperoxy carbonate; peroxyketals such as n-Butyl 4,4-di-(tert-Butyl peroxy) valerate; and dialkyl peroxides such as 1,1-bis(tert-butylperoxy)cyclohexane, 1,1-bis(tert-butylperoxy)-3,3,5-trimethylcyclohexane, 2,2-bis(tert-butylperoxy)butane, dicumylperoxide, tert-butylcumylperoxide, a,a'-bis(tert-butylperoxy-isopropyl)benzene, di-tert-butylperoxide (DTBP), 2,5-dimethyl-2,5-di(tert-butylperoxy)-hexane, 2,5-dimethyl-2,5-di(tert-butylperoxy)-hexane; and the like.

The amount of the polyolefin-based graft copolymer in the composition according to the present invention may range from 0.1 wt.% to 10 wt.% by the total weight of the composition. In some preferable embodiments of the invention, the polyolefin-based graft copolymer contained in the composition is preferably at least 0.2 wt.%, 0.5 wt.%, 0.8 wt.% , or 1 wt.%, and is preferably less than 9 wt.%, 8 wt.%, 7 wt.%, or 6 wt.% by the total weight of the composition.

Typically the thermoplastic vulcanizate itself may already comprise some additive oils or other additives, within the concept of the present invention; however, further additive oils and other additives as above mentioned may be added into the composition according to the present invention in order to achieve some particular properties in certain applications as long as the foam can be prepared.

Another aspect of the present invention provides foam prepared by the composition according to the present invention.

Another aspect of the present invention provides a method for preparation of the foam according to the present invention including steps: (i) combining a thermoplastic vulcanizate, a thermo-expandable microsphere comprising a polymer shell and a propellant encapsulated in said polymer shell, and optionally a polyolefin-based graft copolymer, to form a composition; and (ii) foaming the composition to form the foam.

The foam of the present invention can be prepared by molding the composition of the present invention in either a standard injection molding process or in a standard extrusion process.

In an injection molding process, the thermoplastic vulcanizate, the thermo-expandable microsphere, and polyolefin-based graft copolymer if contained, are introduced into a heated barrel and screw. Once the ingredients are sufficiently plasticized, they are injected into a closed mold under sufficient pressure and injection rate. After allowing sufficient time for the molten polymer to cool, the finished foam can be removed from the mold.

In an extrusion process, all ingredients can be pre-blended and fed into the hopper. The shearing developed by the screw will plasticize and mix all ingredients, build up pressure against the die and push out the melt in a given shape. Outside of the die, the thermo-expandable microsphere will expand and create the foam structure. The expansion process will stop when the gas pressure inside the polymer shell becomes lower than the modulus of the polymer.

The extruder may be any suitable instrument known in the art, for example, from mono - extrusion to multicomponent extrusion combining at least two up to five materials. In one or more embodiments of the invention, the extruder has a smooth barrel. In yet other embodiments, the extruder has a grooved barrel.

It is preferable to produce a high shearing action in the extruders. The screw may be any suitable instrument known in the art so long as it can provide appropriate shearing in the extruders, for example, a pin screw, a Maddock type screw, or a barrier screw. In a preferable embodiment, the screw is a barrier screw. In another preferable embodiment, a Maddock type screw can be used. It is also preferable to select the extruder having a ratio of length to diameter more than 20. The preparation of the foam according to the present invention is independent from screw speed (RPM) since the foaming of thermo-expandable microsphere is only temperature dependent process, for example, in an extrusion process, the screw speed may vary from a low of 5, 10, 15, 20, or 30 to a high of 50, 60, 70, 80, or 100. But a person skilled in the art would know that an extremely high screw speed might destroy the microsphere by high shearing.

The blending of materials in the extruder is generally performed at a temperature not exceeding 400°C, preferably not exceeding 300°C and more particularly not exceeding 250°C. The minimum temperature at which the melt blending is performed is generally higher than or equal to 130°C, preferably higher than or equal to 150°C and more particularly higher than 180°C.

The prepared foam according to the present invention provides reduced density and hardness, as well as a right balance between load deflection and elasticity, which is suitable to a soft touch application.

In one or more embodiments of the invention, compared to a thermoplastic vulcanizate material without thermo-expandable microsphere, a foam made from the composition according to the present application may have a reduced density, determined by ISO 1183, of from 0.4 g/cm³ to 0.9 g/cm³, from 0.5 g/cm³ to 0.85 g/cm³, or from 0.6 g/cm³ to 0.8 g/cm³.

In one or more embodiments of the invention, compared to a thermoplastic vulcanizate without thermo-expandable microsphere, a foam made from the composition according to the present application may have a reduced Shore A hardness of at least about 25, at least 30, at least 35, and of less than 50, 60 or 70. In one or more embodiments, the foam may have a Shore A hardness ranging from a low of 20, 30, or 40 to a high of 50, 60 or 70. In one or more embodiments, the foam may have a Shore D hardness ranging from a low of 25, 30, or 35 to a high of 40, 50 or 60. Those Shore A and Shore D hardness are measured according to ISO 868.

In one or more embodiments of the invention, compared to a thermoplastic vulcanizate without thermo-expandable microsphere, a foam made from the composition according to the present application may have a reduced elongation @ break where elongation ranges from 200% to 400%, or from 250% to 350%, and a reduced tensile strength where Tensile ranges from 1 MPa to 6 MPa, or from 1.5 MPa to 5 MPa. Those tensile properties are measured according to ISO37.

In one or more embodiments of the invention, compared to a thermoplastic vulcanizate without thermo-expandable microsphere, a foam made from the composition according to the present invention may have an increased foam compression ratio of from 15% to 30%, or from 20% to 25%. The foam compression ratio is a ratio of compression of the foam by thickness, which can be measured with a caliber gauge, to that of the original foam. The compression ratio reflects soft touch and relaxation performance of the foam.

In one or more embodiments of the invention, compared to the pure thermoplastic vulcanizate, the foam according to the present invention has a comparative tear resistance of from a low of 3 kN/m, 3.5 kN/m, 4 kN/m to a high of 6 kN/m, 6.5 kN/m, or 7 kN/m. In one or more other embodiments of the invention, the foam has a comparative tear resistance from a low of 5 kN/m, 8 kN/m, 10 kN/m to a high of 15kN/m, 20 kN/m, or 25 kN/m. The tear resistance is expressed by a Trouser Tear measured according to ISO 6383-1. Surprisingly, in one or more embodiments, where a polyolefin-based graft copolymer is contained in the composition, the foam prepared thereby has an improved tear resistance compared to the pure thermoplastic vulcanizate.

The composition or foam according to the present invention is suitable for preparation of an article where soft touch is desirable, such as for automotive use in, for example, arm rest, door panel, or center console, and for non-automotive use in, for example, mouse pads, grips, or in packing materials, shoes, diving equipments, shock absorbers, pipe insulation, cable insulation, carpeting, mats, seals, and gaskets.

Thus, another aspect of the present invention provides an article prepared by the composition according to the present invention or comprising a foam according to the present invention. The article may be selected from the group consisting of packaging material, automobile foams, arm rest, door panel, central console, shoes, diving equipments, shock absorbers, wheels, grips, insulation, carpeting, mats, pads, seals, gaskets.

In one or more embodiments of the invention, the article could be solely made from the composition or the foam according to the present invention, while in one or more embodiments, the article has a multilayer structure in which at least one is made from the composition according to the present invention.

In some embodiments of the invention, the article according to the present invention has a multilayer structure comprising a skin layer, an interior layer and a substrate layer. In these embodiments, the skin layer can be made from a thermoplastic elastomer, in particular a thermoplastic vulcanizate, and the interior layer is made from the foam according to the present invention, and the substrate layer is made from a polyolefinic resin, for example, polypropylene filled with or without fillers, such as, talc, glass fiber. This multilayer-structure article can offer a "cushion-like" deformation of surface, which improves the touch experience and relaxation performance.

The molding process of preparing the multilayer-structured article may be any methods known in the art, for example, a sandwich molding process comprising steps of: separately molding a substrate layer in a first cavity; inserting the substrate layer into a second cavity of a sandwich (co-injection) mold; injecting the skin layer in the second cavity and followed by an injection of the interior layer made from the composition of present invention till the second cavity is filled out; and shaping the skin material on the final tool shape (for example, die).

In some embodiments, the present invention also relates to:
Paragraph 1. A composition comprising:
   a) a thermoplastic vulcanizate, and
   b) a thermo-expandable microsphere comprising a polymer shell and a propellant encapsulated in said polymer shell;
   wherein said composition comprises from 0.1 wt.% to 10 wt.% of said thermo-expandable microsphere based on the weight of said composition.
Paragraph 2. The composition of paragraph 1 comprising at least 80 wt.% of said thermoplastic vulcanizate based on the weight of said composition.
Paragraph 3. The composition of any of Paragraphs 1 to 2 comprising 0.5 wt.% to 1.5 wt.% of said thermo-expandable microsphere based on the weight of the composition.
Paragraph 4. The composition of any of Paragraphs 1 to 3, wherein said thermoplastic vulcanizate comprises i) 5 wt.% to 85 wt.% of a thermoplastic resin component; and ii) 15 wt.% to 95 wt.% of a dispersed and at least partially vulcanized rubber component; based on the total weight of said thermoplastic resin component and said rubber component.
Paragraph 5. The composition of Paragraph 4, wherein said rubber component comprises ethylene-propylene rubber, ethylene-propylene-diene rubber, natural rubber, butyl rubber, halobutyl rubber, halogenated rubber copolymer of p-alkystyrene and at least one isomonoolefin having 4 to 7 carbon atoms, a copolymer of isobutylene and divinyl-benzene, a rubber homopolymer of a conjugated diene having from 4 to 8 carbon atoms, a rubber copolymer having at least 50 wt.% repeat units from at least one conjugated diene having from 4 to 8 carbon atoms and a vinyl aromatic monomer having from 8 to 12 carbon atoms, or acrylonitrile monomer, or an alkyl substituted acrylonitrile monomer having from 3 to 8 carbon atoms, or an unsaturated carboxylic acid monomer, or an unsaturated anhydride of a dicarboxylic acid, or combinations thereof.
Paragraph 6. The composition of any of Paragraphs 4 to 5, wherei said thermoplastic resin component comprises at least one of i) a polymer prepared from olefin monomers having 2 to 7 carbon atoms and ii) a copolymer prepared from olefin monomers having 2 to 7 carbon atoms with a (meth)acrylate or a vinyl acetate.
Paragraph 7. The composition of any of Paragraphs 4 to 6, wherein said thermoplastic resin component comprises polyethylene, polypropylene, ethylene-propylene copolymer or combinations thereof.
Paragraph 8. The composition of any of Paragraphs 1 to 7, wherein said thermo-expandable microsphere has a Tₛₜₐᵣₜ of at least 100°C, and a Tₘₐₓ of less than 300°C.
Paragraph 9. The composition of any of Paragraphs 1 to 8, wherein said thermo-expandable microsphere has a Tₛₜₐᵣₜ of at least 120°C, and a Tₘₐₓ of less than 240°C.
Paragraph 10. The composition of any of Paragraphs 1 to 9 further comprising c) a polyolefin-based graft copolymer.
Paragraph 11. The composition of any of Paragraphs 1 to 10 comprising from 0.1 wt.% to 10 wt.% of said polyolefin-based graft copolymer based on the weight of said composition.
Paragraph 12. The composition of any of Paragraphs 1 to 11 comprising from 1 wt.% to 6 wt.% of said polyolefin-based graft copolymer based on the weight of said composition.
Paragraph 13. The composition of any of Paragraphs 1 to 12, wherein said polyolefin-based graft copolymer comprises a polypropylene-maleic anhydride graft copolymer.
Paragraph 14. The composition of any of Paragraphs 1-14, wherein the thermoplastic vulcanizate contains less than 50 wt. %, or less than 30 wt. %, or less than 10 wt. %, or less than 1 wt. %, or does not contain any, styrenic block copolymer having a hydrogenated midblock of styrene-ethylene/butylene-styrene (SEBS) or styrene-ethylene/propylene-styrene (SEPS).
Paragraph 15. A composition comprising, based on the weight of said composition:
   a) at least 80 wt.% of a thermoplastic vulcanizate comprising i) 5 wt.% to 85 wt.% of a thermoplastic resin component; and ii) 15 wt.% to 95 wt.% of a dispersed and at least partially vulcanized rubber component, based on the total weight of said thermoplastic resin component and said rubber component;
   b) from 0.3 to 6 wt.% of a thermo-expandable microsphere comprising a polymer shell and a propellant encapsulated in said polymer shell, and said thermo-expandable microsphere having a Tₛₜₐᵣₜ of at least 100°C, and a Tₘₐₓ of less than 300°C; and
   c) from 1 wt.% to 6 wt.% of a polypropylene-based graft copolymer on the weight of the composition.
Paragraph 16. A method for making a composition, comprising a step of combining a thermoplastic vulcanizate, a thermo-expandable microsphere comprising a polymer shell and a propellant encapsulated in said polymer shell, and optionally a polyolefin-based graft copolymer.
Paragraph 17. A foam made from the composition of any of Paragraphs 1 to 15.
Paragraph 18. The foam of Paragraph 17, wherein said foam has a Shore A hardness determined by ISO 868 of from 20 to 70.
Paragraph 19. The foam of Paragraphs 17 or 18, wherein said foam has a density determined by ISO 1183 of from 0.4 g/cm3 to 0.9 g/cm3.
Paragraph 20. The foam of any of Paragraphs 17 to 19, wherein said foam has an ultimate elongation @ break of from 200% to 400% and an ultimate tensile strength of from 1 MPa to 6 MPa, as determined by ISO 37.
Paragraph 21. The foam of any of Paragraphs 17 to 20, wherein said foam has a compression ratio of from 15% to 35% by thickness, as measured with a caliber gauge. Paragraph 22. A method for preparation of a foam comprising steps of:
   (i) combining a thermoplastic vulcanizate, a thermo-expandable microsphere comprising a polymer shell and a propellant encapsulated in said polymer shell, and optionally a
      polyolefin-based graft copolymer, to form a composition; and
   (ii) foaming the composition to form the foam.
Paragraph 23. An article comprising the foam of any of Paragraphs 17 to 21 or the foam prepared by method of Paragraph 22.
Paragraph 24. The article of Paragraph 23 comprising a skin layer made from a thermoplastic elastomer, an interior layer made from the foam of claim 17, and a substrate layer made from a polyolefinic resin.
Paragraph 25. The article of Paragraphs 23 or 24, wherein said article is selected from the group consisting of packaging material, automobile foams, arm rest, door panel, central console, shoes, diving equipments, shock absorbers, wheels, grips, insulation, carpeting, mats, pads, seals, and gaskets.

### Examples

Now illustrative examples will be described for demonstrating some advantages of the present invention but other advantages of the present invention shall be apparent to those skilled in the art.

For purposes of convenience, various specific test procedures are identified in the Table 1 for determining properties such as density, elongation break, tensile strength, Trouser Tear, compression ratio, Shore A Hardness. However, when a person of ordinary skill reads this patent and wishes to determine whether a composition or polymer has a particular property identified in a claim, then any published or well-recognized method or test procedure can be followed to determine that property, although the specifically identified procedure is preferred. Each claim should be construed to cover the results of any of such procedures, even to the extent different procedures may yield different results or measurements.

**Table 1: Testing Method**

| Property | Testing Method |
|---|---|
| Density | ISO 1183 |
| Shore A hardness | ISO 868 |
| Elongation @ break | ISO 37 |
| Tensile Strength | ISO 37 |
| Trouser Tear | ISO 6383-1 |
| Foam compression ratio | a ratio of compression of the foam by thickness, measured with a caliber gauge, to that of the original foam |

Examples 1 to 8 are directed to foams made from a composition of present invention. Comparative Examples A and B are directed to thermoplastic vulcanizate materials without a thermo-expandable microsphere. The materials used in the examples are as follows.

Thermoplastic vulcanizate: Santoprene™ 121-73W175 (TPV-A) and Santoprene™ 121-58W175 (TPV-B), both available from ExxonMobil Chemical Company, which comprises cured ethylene-propylene rubber dispersed in polypropylene continuous phase.

Thermo-expandable microsphere: Expancel™ 950-120, commercially available from Akzo Noble N.V. and reported as having a Tₛₜₐᵣₜ of 140°C and a Tₘₐₓ of 205°C.

Polyolefin-based graft copolymer: Exxelor™ 1020, commercially available from ExxonMobil Chemical Company, which is a polypropylene-maleic anhydride graft copolymer.

The formula of the examples are shown in the below Table 2.

**Table 2: Formulas of Foam**

| Example | TPV -A (wt. %) | TPV-B (wt. %) | Thermo-expandable microsphere (wt.%) | Polymer-based graft copolymer (wt.%) |
|---|---|---|---|---|
| 1 | 99 | | 1 | 0 |
| 2 | 98.5 | | 1 | 0.5 |
| 3 | 98 | | 1.50 | 0.5 |
| 4 | 99.25 | | 0.50 | 0.25 |
| Comparative A | 100 | | 0 | 0 |
| 5 | | 99.25 | 0.50 | 0.25 |
| 6 | | 99 | 1 | 0 |
| 7 | | 98.5 | 1 | 0.50 |
| 8 | | 97.75 | 1.50 | 0.75 |
| Comparative B | | 100 | 0 | 0 |

Preparation of the foam was made by standard extrusion process. Processing conditions are described in the Table 3.

**Table 3: Processing Conditions**

| | |
|---|---|
| Feed Temp. (°C) | 35 |
| Extruder Zone 1 Temp. (°C) | 160 |
| Extruder Zone 2 Temp. C2 (°C) | 170 |
| Extruder Zone 3 Temp. C3 (°C) | 185 |
| Extruder Zone 4 Temp. C4 (°C) | 190 |
| Clamp Temp. C5 (°C) | 200 |
| Die Zone 1 Temp. (°C) | 200 |
| Die Zone 2 Temp. (°C) | 200 |
| Extruder Diameter | 35 mm |
| Screw Type | Barrier |
| Screw Speed (RPM) | 10 |

The extruded foam was shaped as tubes having an outer diameter of about 10 mm and an inner diameter of about 8 mm in order to measure material properties according to the ISO standards. Density, elongation at break, tensile strength, Trouser Tear was measured by the methods mentioned in the Table 1 for evaluating the material properties, such as elasticity and mechanical properties, of the prepared foam. Results are shown in Table 4.

**Table 4: Testing Result**

| Example | Density (g/cm³) | Elongation @ Break (%) | Tensile Strength (MPa) | Trouser Tear (kN/m) |
|---|---|---|---|---|
| 1 | 0.74 | 294 | 4.714 | 5.12 |
| 2 | 0.75 | 303 | 4.631 | 6.12 |
| 3 | 0.7 | 278 | 4.563 | 5.93 |
| 4 | 0.82 | 349 | 5.739 | 5.76 |
| Comparative A | 0.95 | 412 | 8.536 | 5.92 |
| 5 | 0.84 | 306 | 3.114 | 5.03 |
| 6 | 0.75 | 292 | 2.576 | 4.1 |
| 7 | 0.75 | 294 | 2.464 | 4.45 |
| 8 | 0.69 | 279 | 2.267 | 4.56 |
| Comparative B | 0.97 | 430 | 4.985 | 5.27 |

It can be seen from the above testing results that the densities of the foam were significantly reduced, and although the elongation @ break and the tensile strength were reduced, the foam still showed good elastic properties. It can also be seen that mechanical properties such as Trouser Tear of foams prepared according to the present invention were comparable to those of the comparative thermoplastic vulcanizates. In Example 2, the Trouser Tear was even at least that of the comparative thermoplastic vulcanizate (Comparative Example 2).

Examples 9 to 15 are directed to a three-layered article applied in armrest for automotive. The articles of Examples 9 to 15 comprised a skin layer made from a thermoplastic vulcanizate, Santroprene™ 8211-75M300 available from ExxonMobil Chemical Company, a foamed core layer made from a blend of thermoplastic vulcanizate, Santroprene™ 8211-45 (TPV-C) or 8211-25 (TPV-D), available from ExxonMobil Chemical Company, and thermo-expandable microsphere, Expancel™ 930 MB120 having a Tₛₜₐᵣₜ of 120°C and a Tₘₐₓ of 205°C or 950 MB80 having a Tₛₜₐᵣₜ of 140°C and a Tₘₐₓ of 200°C, available from Akzo Nobel N.V., and a substrate polypropylene layer (PP insert) made from polypropylene filled with 20 wt.% of talc. The injection process was made in a 2K sandwich molding machine produced by Ferromatik Milacron GmbH and took place by three steps: separately molded a substrate layer made from polypropylene in a first cavity; inserted the substrate layer into a second cavity with a sandwich mold; and injected the skin layer in the second cavity and followed by an injection of the interior layer made from the composition as formulated in the Table 5 till the second cavity was filled out; and shaped the three layered article in a final tool shape as the desired shape. Some processing conditions included a melt temperature ranging from 170°C to 205°C as shown in the Table 5, a tool temperature of the room temperature, a holding pressure of 0 bar, the injecting time for the interior layer was about 3 to about 5 secs with the injection speed ranging from 100 mm/sec to 300 mm/sec, which was varied from runner, gate and at least part design, and the core shot size of 75%.

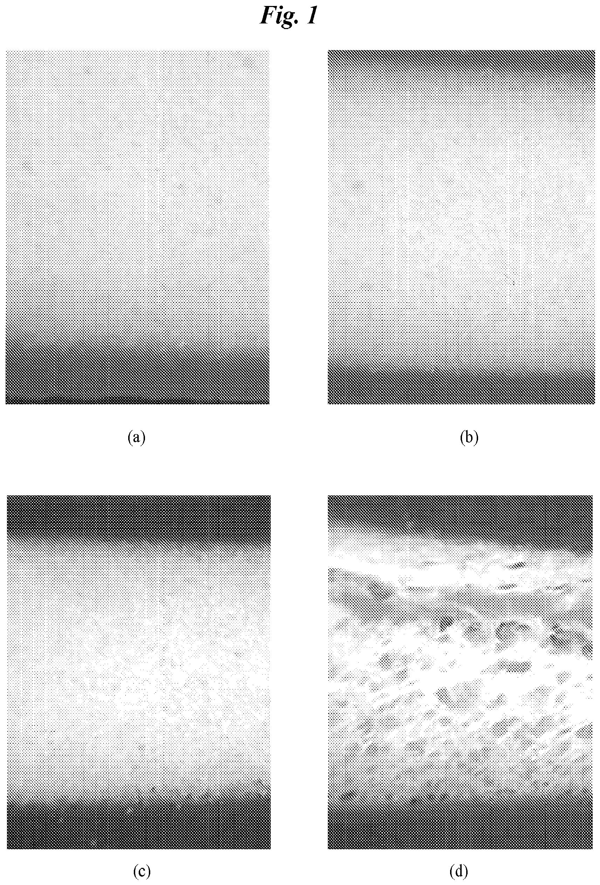

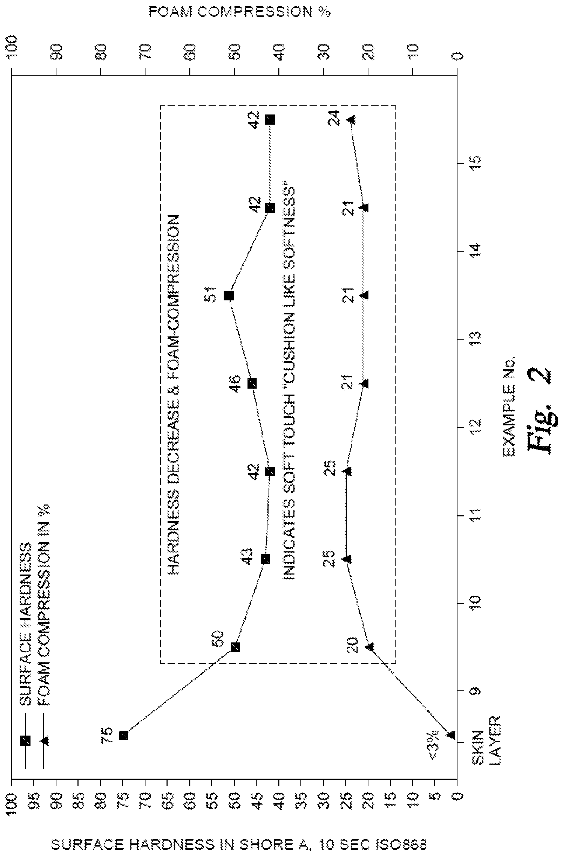

Formula and some of the foamed interior layer and foam performance of the three-layered article are listed in the Table 5. The testing results of foam expansion, foam compression ratio, and hardness are listed in the Table 6. Foam appearance was observed after cutting off the skin layer. Fig.1 illustrates a cross section of the foam in example 9 at a position close to the gate of the injection mold (a), at an intermediate position to the gate of the injection mold (b), and at an opposite position to the gate of the injection mold (c). Fig. 2 illustrates hardness and compression performance of an article comprising a foam according to Examples 9 to 15 in comparison with an article comprising only skin layer made from the thermoplastic vulcanizate.

**Table 5: Formula and Processing Conditions**

| | Formula of interior layer | | Processing |
|---|---|---|---|
| Example | Thermoplastic vulcanizate | Thermo-expandable microsphere | Extruder Temperature (°C) (Zone 1- Zone 2- Zone 3- Zone 4) |
| 9 | TPV-C: 94 wt.% | 930MB 120:6 wt.% | 170-180-195-190 |
| 10 | TPV-D: 94 wt.% | 930MB 120:6 wt.% | 170-180-195-190 |
| 11 | TPV-D: 94 wt.% | 930MB 120:6 wt.% | 180-190-205-200 |
| 12 | TPV-D: 94 wt.% | 950MB80:6 wt.% | 180-190-205-200 |
| 13 | TPV-C: 94 wt.% | 930MB 120:6 wt.% | 170-180-195-190 |

**Table 5 Cont.**

| | Formula of interior layer | | Processing |
|---|---|---|---|
| Example | Thermoplastic vulcanizate | Thermo-expandable microsphere | Extruder Temperature (°C) (Zone 1- Zone 2- Zone 3- Zone 4) |
| 14 | TPV-D: 94 wt.% | 930MB 120:6 wt.% | 170-180-195-190 |
| 15 | TPV-D: 94 wt.% | 930MB 120:6 wt.% | 170-180-195-190 |

**Table 6: Foam Performance**

| Example | Article Thickness (mm) | Foam Compression ratio (%) | Shore A Hardness | Foam appearance | Foam performance |
|---|---|---|---|---|---|
| 9 | 7.3 | 20 | 50 | Soft, no warpage | Good compression & response |
| 10 | 7.1 | 25 | 43 | Very soft, no warpage | Good compression & response |
| 11 | 7.1 | 25 | 42 | Very soft, no warpage | Good compression & response |
| 12 | 7.3 | 21 | 46 | Soft, no warpage | Good compression & response |
| 13 | 7.3 | 21 | 51 | Soft, no warpage | Good compression & response |
| 14 | 7.2 | 21 | 42 | Very soft, no warpage | Good compression & response |
| 15 | 7.3 | 24 | 42 | Very soft, no warpage | Good compression & response |

The hardness and the foam compression ratio of the skin layer of the article of the Examples 9 to 15 were also measured. The hardness was 75 and the compression ratio was less than 3%. It can be seen from the above results, and Figs. 1 and 2, that the articles comprising the foam of present invention provided very good compression and response properties and homogeneous cell structure, indicating a cushion-like performance.

## Claims

1. A composition comprising:
a) a thermoplastic vulcanizate, and
b) a thermo-expandable microsphere comprising a polymer shell and a propellant encapsulated in said polymer shell,
wherein said composition comprises from 0.1 wt.% to 10 wt.% of said thermo-expandable microsphere based on the weight of said composition.

2. The composition of claim 1 comprising at least 80 wt.% of said thermoplastic vulcanizate based on the weight of said composition.

3. The composition of claim 1 or claim 2 comprising 0.5 wt.% to 1.5 wt.% of said thermo-expandable microsphere based on the weight of the composition.

4. The composition of any one of claims 1-3, wherein said thermoplastic vulcanizate comprises:
i) 5 wt.% to 85 wt.% of a thermoplastic resin component; and
ii) 15 wt.% to 95 wt.% of a dispersed and at least partially vulcanized rubber component;
based on the total weight of said thermoplastic resin component and said rubber component.

5. The composition of claim 4, wherein said thermoplastic resin component comprises at least one of i) a polymer prepared from olefin monomers having 2 to 7 carbon atoms and ii) a copolymer prepared from olefin monomers having 2 to 7 carbon atoms with a (meth)acrylate or a vinyl acetate.

6. The composition of any one of claims 1-5, wherein said thermo-expandable microsphere has a Tₛₜₐᵣₜ of at least 100°C, and a Tₘₐₓ of less than 300°C.

7. The composition of any one of claims 1-6 further comprising c) 0.1 wt.% to 10 wt.% of a polyolefin-based graft copolymer, based on the weight of said composition.

8. The composition of claim 7, wherein said polyolefin-based graft copolymer comprises a polypropylene-maleic anhydride graft copolymer.

9. A foam made from the composition of any one of claims 1-8.

10. The foam of claim 9, wherein said foam has a Shore A hardness determined by ISO 868 of from 20 to 70.

11. The foam of claim 9 or 10, wherein said foam has an ultimate elongation @ break of from 200% to 400% and an ultimate tensile strength of from 1 MPa to 6 MPa, as determined by ISO 37.

12. An article comprising the foam of any one of claims 9-11.

13. The article of claim 12 comprising a skin layer made from a thermoplastic elastomer, an interior layer made from the foam of any one of claims 9-11, and a substrate layer made from a polyolefinic resin.

14. A method for preparation of a foam comprising steps of:
(i) combining a thermoplastic vulcanizate, a thermo-expandable microsphere comprising a polymer shell and a propellant encapsulated in said polymer shell, and optionally a polyolefin-based graft copolymer, to form a composition; and
(ii) foaming the composition to form the foam.

## Patentansprüche

1. Zusammensetzung, umfassend:
a) ein thermoplastisches Vulkanisat und
b) ein thermoexpandierbares Mikrokügelchen, das eine Polymerhülle und ein in der Polymerhülle eingeschlossenes Treibmittel umfasst,
wobei die Zusammensetzung 0,1 Gew.-% bis 10 Gew.-% des thermoexpandierbaren Mikrokügelchens umfasst, bezogen auf das Gewicht der Zusammensetzung.

2. Zusammensetzung nach Anspruch 1, die mindestens 80 Gew.-% des thermoplastischen Vulkanisats umfasst, bezogen auf das Gewicht der Zusammensetzung.

3. Zusammensetzung nach Anspruch 1 oder Anspruch 2, die 0,5 Gew.-% bis 1,5 Gew.-% des thermoexpandierbaren Mikrokügelchens umfasst, bezogen auf das Gewicht der Zusammensetzung.

4. Zusammensetzung nach einem der Ansprüche 1-3, wobei das thermoplastische Vulkanisat
i) 5 Gew.-% bis 85 Gew.-% von einer thermoplastischen Harzkomponente und
ii) 15 Gew.-% bis 95 Gew.-% von einer dispergierten und zumindest teilweise vulkanisierten Kautschukkomponente umfasst,
bezogen auf das Gesamtgewicht der thermoplastischen Harzkomponente und der Kautschukkomponente.

5. Zusammensetzung nach Anspruch 4, wobei die thermoplastische Harzkomponente mindestens eines von i) einem Polymer, das aus Olefinmonomeren mit 2 bis 7 Kohlenstoffatomen hergestellt ist, und ii) einem Copolymer, das aus Olefinmonomeren mit 2 bis 7 Kohlenstoffatomen und einem Methacrylat oder einem Vinylacetat hergestellt ist, umfasst.

6. Zusammensetzung nach einem der Ansprüche 1-5, wobei das thermoexpandierbare Mikrokügelchen eine T_{Start} von mindestens 100°C und eine Tₘₐₓ von weniger als 300°C aufweist.

7. Zusammensetzung nach einem der Ansprüche 1-6, die ferner c) 0,1 Gew.-% bis 10 Gew.-% von einem polyolefinbasierten Pfropfcopolymer umfasst, bezogen auf das Gewicht der Zusammensetzung.

8. Zusammensetzung nach Anspruch 7, wobei das polyolefinbasierte Pfropfcopolymer ein Polypropylen-Maleinsäureanhydrid-Pfropfcopolymer umfasst.

9. Schaum, hergestellt aus der Zusammensetzung gemäß einem der Ansprüche 1-8.

10. Schaum nach Anspruch 9, wobei der Schaum eine Shore-A-Härte von 20 bis 70 aufweist, bestimmt mittels ISO 868.

11. Schaum nach Anspruch 9 oder 10, wobei der Schaum eine maximale Bruchdehnung von 200% bis 400% und eine maximale Zugfestigkeit von 1 MPa bis 6 MPa aufweist, bestimmt mittels ISO 37.

12. Artikel, der den Schaum gemäß einem der Ansprüche 9-11 umfasst.

13. Artikel nach Anspruch 12, der eine Außenschicht, die aus einem thermoplastischen Elastomer hergestellt ist, eine Innenschicht, die aus dem Schaum gemäß einem der Ansprüche 9-11 hergestellt ist, und eine Substratschicht, die aus einem polyolefinischen Harz hergestellt ist, umfasst.

14. Verfahren zum Herstellen eines Schaumes, bei dem
(i) ein thermoplastisches Vulkanisat, ein thermoexpandierbares Mikrokügelchen, das eine Polymerhülle und ein in der Polymerhülle eingeschlossenes Treibmittel umfasst, und gegebenenfalls ein polyolefinbasiertes Pfropfcopolymer zusammengegeben werden, um eine Zusammensetzung zu bilden, und
(ii) die Zusammensetzung geschäumt wird, um den Schaum zu bilden.

## Revendications

1. Composition comprenant :
a) un vulcanisat thermoplastique, et
b) une microsphère thermo-expansible comprenant une enveloppe polymère et un propulseur encapsulé dans ladite enveloppe polymère,
ladite composition comprenant de 0,1 % en poids à 10 % en poids de ladite microsphère thermo-expansible relativement au poids de ladite composition.

2. Composition selon la revendication 1, comprenant au moins 80 % en poids dudit vulcanisat thermoplastique relativement au poids de ladite composition.

3. Composition selon la revendication 1 ou selon la revendication 2, comprenant 0,5 % en poids à 1,5 % en poids de ladite microsphère thermo-expansible relativement au poids de la composition.

4. Composition selon l'une quelconque des revendications 1 à 3, dans laquelle ledit vulcanisat thermoplastique comprend :
i) 5 % en poids à 85 % en poids d'un constituant résine thermoplastique ; et
ii) 15 % en poids à 95 % en poids d'un constituant caoutchouc dispersé et au moins partiellement vulcanisé, relativement au poids total dudit constituant résine thermoplastique et dudit constituant caoutchouc.

5. Composition selon la revendication 4, dans laquelle ledit constituant résine thermoplastique comprend au moins l'un de i) un polymère préparé à partir de monomères oléfines comportant 2 à 7 atomes de carbone et ii) un copolymère préparé à partir de monomères oléfines comportant 2 à 7 atomes de carbone avec un (méth)acrylate ou un acétate de vinyle.

6. Composition selon l'une quelconque des revendications 1 à 5, dans laquelle ladite microsphère thermo-expansible a une température T_{départ} d'au moins 100 °C, et une température Tₘₐₓ inférieure à 300 °C.

7. Composition selon l'une quelconque des revendications 1 à 6, comprenant en outre c) 0,1 % en poids à 10 % en poids d'un copolymère greffé à base de polyoléfine, relativement au poids de ladite composition.

8. Composition selon la revendication 7, dans laquelle ledit copolymère greffé à base de polyoléfine comprend un copolymère greffé de polypropylène-anhydride maléique.

9. Mousse fabriquée à partir de la composition selon l'une quelconque des revendications 1 à 8.

10. Mousse selon la revendication 9, ladite mousse ayant une dureté Shore A, déterminée par la méthode ISO 868, de 20 à 70.

11. Mousse selon la revendication 9 ou 10, ladite mousse ayant une valeur limite d'allongement à la rupture de 200 % à 400 % et une valeur limite de résistance à la traction de 1 MPA à 6 MPA, déterminées par la méthode ISO 37.

12. Article comprenant la mousse selon l'une quelconque des revendications 9 à 11.

13. Article selon la revendication 12, comprenant une pellicule qui se compose d'un élastomère thermoplastique, une couche intérieure qui se compose de la mousse selon l'une quelconque des revendications 9 à 11, et une couche de substrat qui se compose d'une résine polyoléfinique.

14. Procédé de préparation d'une mousse, comprenant les étapes qui consistent à :
(i) combiner un vulcanisat thermoplastique, une microsphère thermo-expansible comprenant une enveloppe polymère et un propulseur encapsulé dans ladite enveloppe polymère, et optionnellement un copolymère greffé à base de polyoléfine, pour former une composition ; et
(ii) transformer la composition en mousse pour former la mousse.
